# EUROPEAN PATENT SPECIFICATION

(11) **EP 1 847 137 B1**
(45) Date of publication and mention of the grant of the patent: **20.10.2010**
(21) Application number: 05711031.4
(22) Date of filing: 08.02.2005
(51) Int. Cl.: H04L 29/08, H04W 76/00

(54) **IMPLEMENTATION OF A SESSION BASED SERVICE IN A MOBILE COMMUNICATION NETWORK**
IMPLEMENTIERUNG EINES SITZUNG-BASIERTEN DIENSTES IN EINEM MOBILKOMMUNIKATIONSNETZ
IMPLEMENTATION D'UN SERVICE BASE SUR UNE SESSION DANS UN RESEAU DE COMMUNICATION MOBILE

(43) Date of publication of application: 24.10.2007
(73) Proprietor: Telefonaktiebolaget LM Ericsson (publ), 164 83 Stockholm (SE)
(72) Inventor: LING, Robbie, Shanghai 200335 (CN); ZHANG, Jialu, Shanghai 200051 (CN); WANG, Liang, Shanghai 200237 (CN); LU, Yunjie, 2000051 Shanghai (CN)
(74) Representative: Norin, Klas
(86) International application number: PCT/SE2005/000154
(87) International publication number: WO 2006/085799

(56) References cited:
- WO-A1-2005/029809
- WO-A1-2005/043944
- US-A1- 2002 131 397
- MAHY R. ET AL.: 'The Message Session Relay Protocol draft-ietf-simple-message-sessions-07.txt' CISCO SYSTEMS, [Online] 18 July 2004, XP015027597 Retrieved from the Internet: <URL:www.ietf.org/proceedings/04aug/I-D/dra ft-ietf-simple-message-sessions-07.txt>

## Description

### TECHNICAL FIELD

The present invention relates to a method and an arrangement in a mobile communication network.

In particular, the invention relates to a method and arrangements for implementing a session based service in a mobile communication network according to the preamble of claims 1 and 11.

### BACKGROUND OF THE INVENTION

The telecommunication industry is currently shifting towards all-IP systems, driven by the need to reduce costs and create new revenue generating services.

A conventional third-generation (3G) mobile telecommunication network, according to the 3GPP standards, is divided into an Access Network (AN) and a Core Network (CN). In a GSM network, the AN is a Base Station System (BSS) and in a UMTS network, the AN is a Radio Network System (RNS). The AN is responsible for communicating with mobile terminals in a certain area. The RNS comprises one Radio Network Controller (RNC) and several Node Bs also denoted base stations.

The CN is logically divided into a CS domain and a PS domain. The CS domain refers to the set of CN entities offering "CS type of connection" for user traffic and related signalling. A "CS type of connection" is a connection for which dedicated network resources are allocated at the connection establishment and released at the connection release. Usually, it refers to voice and related signalling connection. The CS domain comprises e.g. a Mobile Switching Center (MSC), Gateway MSC (GMSC), and a Visitor Location Register (VLR). The PS domain refers to the set of CN entities offering "PS type of connection" for user traffic and related signalling. A "PS type of connection" transports the user information using autonomous concatenation of bits called packets: each packet can be routed independently of the other packets. Usually, a PS connection refers to a data connection. Examples of entities in the PS domain are: Serving GPRS Support Node (SGSN) and Gateway GPRS Support Node (GGSN).

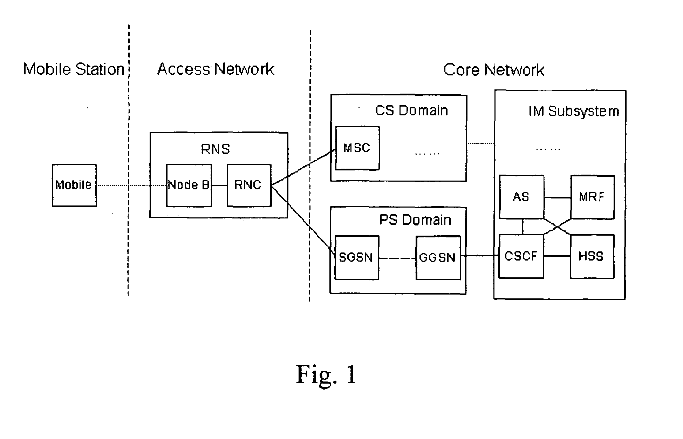

At this time, the IP Multimedia (IM) Subsystem is introduced in the CN to fill the gap between traditional telecommunication and Internet technologies as shown in **figure 1****.** To achieve access independence and to maintain a smooth interoperation with the terminals across the Internet, the object of the IP multimedia subsystem is to conform to the IETF "Internet standards". One of the most important protocols in this context is Session Initiate Protocol (SIP). SIP is a signalling protocol for Internet conferencing, telephony, presence, events notification and instant messaging. It has now also become the signalling protocol for multimedia communication in the telecommunication world.

The IM subsystem comprises the CN elements for provision of IP multimedia services comprising audio, video, text, chat, etc. and a combination thereof delivered over the PS domain.

The core entities in the IM Subsystem are: Call Session Control Function (CSCF), Home Subscriber Server (HSS) and Media Resource Function (MRF). For the service development and service deployment, the Application Server (AS) is a very important entity. Besides, there are other entities to provide interworking functionality between the IM subsystem and PSTN: Media Gateway Control Function (MGCF), Media Gateway (MGW), and Signalling Gateway (SGW).

The CSCF handles session establishment, modification and release of sessions using the SIP/SDP protocol suite. It supports retransmission schemes and hop-by-hop reliability for the SIP methods. According to the behaviour, the CSCF can act as Proxy CSCF (P-CSCF), Serving CSCF (S-CSCF) and Interrogation CSCF (I-CSCF).

The P-CSCF is the first contact point for the mobile station in the IM subsystem and it behaves like a SIP proxy. The P-CSCF proxies the SIP messages towards the home network for the subscriber. The I-CSCF is the entry point to the home network. The other networks use the Domain Name System (DNS) to route the messages to the home network, which will forward the SIP signalling to the I-CSCF. The I-CSCF contacts the HSS to locate the address of S-CSCF and forwards the SIP message to the S-CSCF. The S-CSCF is the SIP proxy that provides the access to the services to the end user. Depending on the profile information from the HSS, the S-CSCF will forward the originating and terminating SIP signalling to the AS in the home network to provide the services.

The HSS is the master database and contains all user and subscriber information. It supports the network elements handling calls and sessions. Moreover, the authorization and security information is stored in HSS. It is an evolution of the Home location Register (HLR) and Authentication Centre (AuC) in the mobile telecommunication networks.

The MRF provides the capability to control multimedia stream resources. It can support the functions such like mixing, generating, processing media streams. Logically, it consists of Media Resource Function Controller (MRFC) and Media Resource Function Processor (MRFP). The MRFC is responsible for conference session control and the MRFP is responsible for processing content in conversational multimedia services.

The AS offers value-added IM services residing in the user's home network or in a third location. Usually, the AS contains the SIP Application Server functionalities. The SIP Application Server can influence and impact the SIP messages on behalf of the services from/to S-CSCF. By means of the AS, a variety of services can be developed and deployed.

One such service is a service provided by a whiteboard application. The word "whiteboard" is used to indicate a board with a smooth, e.g. a white surface, which can be written and drawn on using special pens or other devices. Usually, it is an application that provides a principle service for teleconference. Such service enables multiple users to write and draw on the "same logical area" in order to share information between each other.

### Problems with existing solutions

There exist several session based services such as the whiteboard services in the market already.

For PC, notebook and Pocket PC clients, there are two widely used products providing the whiteboard services: the NetMeeting provided by Microsoft and the Sametime provided by IBM. Those clients connect to an Instant Messaging server that resides in the Internet. The connection can then be established via the server. After setting up the connection, the whiteboard application can be launched. For this service, the access to the Internet is the prerequisite. Usually, people have access to the Internet e.g. at home, at the office, or at the hotel via a network cable. When the Wi-Fi technology appears, the network cable restriction no longer exists. Wi-Fi is an abbreviation for "Wireless Fidelity". It is a set of standards for wireless local area networks (WLAN) currently based on the IEEE 802.11 specifications. Wi-Fi was intended to be used for wireless devices and LANs, but is now often used for Internet access. It enables a person with a wireless-enabled computer or Personal Digital Assistant (PDA) to connect to the Internet when in proximity of an access point called a hotspot. The drawback is that people can not enjoy the service outside those hotspots.

Colligo develops another way to use the Wi-Fi and Bluetooth technology to provide the whiteboard service. Equipped with Wi-Fi card or Bluetooth chip, Notebooks, Pocket PCs, Palms and PDAs can discover the devices nearby. And then, the connection can be setup after the successful discovery. So, the users nearby can enjoy the whiteboard services. In this way, people can use the whiteboard easily, but the drawbacks are obvious. People can only communicate with each other nearby. Outside the radio coverage, connection could not be established.

Thus, by using the two methods described above, it is not possible to use the session based service such as the whiteboard service at any time, at any place. By implementing the session based service in a mobile telecommunication network having the 1M subsystem and that covers large areas, the service can then be used widely.

The session based services require an exchange of control information between the involved units, such as between a plurality of mobile terminals. An example of exchange of control information is transmission of different commands between the units. To further describe this, the whiteboard service is used as an example among several. The whiteboard service requires that the mobile terminal comprises means for transmitting the information drawn in the mobile terminal and related commands, so that the information and the commands can be represented to other mobile terminals at remote locations at the same time. Thus, the information represented on the screen of the mobile terminal is required to be transmitted immediately on the screen of the remote party's mobile terminal. Also, it should be possible to use the service during a conversation, so that the user can discuss a problem or make clarification by using the whiteboard.

Usually, the high-end pen-equipped mobile terminals can use the whiteboard easily. Beside, with the joystick, the low-end mobile phones can also simulate the pen action to use the whiteboard.

A further problem in existing implementations, such as the whiteboard functionality of Groupboard is that the whiteboard application is implemented directly based on TCP, which implies that the design of the application must be performed on bit level, which is inconvenient for the designer.

Mahy R. et. al.:"The message session relay protocol draft-ietf-simple-message-sessions-07.txt"CISCO SYSTEMS,[Online] 18 July 2004, retrieved from the internet URL:www.ietf.org/proceedings/04aug/I-D/draft-ietf-simple-message-sessions-07.txt is a document describing the message session relay protocol (MRSP).

US 2002 131 397 A1 discloses a system for high speed wireless broadcast data transmission and reception.

WO 2005 043944 A1 and WO 2005 029809 are prior art under Article 54(3) EPC.

WO 2005 043944 A1 shows a telecommunication network comprising a group call service server which facilitates a group call over a radio interface between different user equipment units in a defined group. The group call service server receives a floor request by using a MRSP message from a requesting user equipment included in the group and handles the floor request based on a media type associated with the floor request.

WO 2005 029809 discloses a method for transporting information between end users by using the message session relay protocol (MRSP) to encapsulate information transmitted between users.

### SUMMARY OF THE INVENTION

An object of the invention is hence to achieve an implementation of a session based service that is user friendly for software designers developing the application associated with said service.

The object of the invention is achieved by the method according to claim 1, and by the mobile terminal according to claim 11.

According to a first aspect of the present invention, a method in a mobile terminal for implementing a session based service is provided. The session based service is implemented by using an Internet Multimedia subsystem between the mobile terminal and a second unit and by exchanging control information between the mobile terminal and the second unit. The method comprises the steps of transmitting and/or receiving said control information of the session based service in the body field of an Message Session Relay Protocol, MSRP,-message and identifying said control information in said body field by means of a content type field of the MSRP-message, wherein the content type field is arranged according to Multipurpose Internet Mail Extension, MIME syntax.

According to a second aspect of the present invention, a mobile terminal arranged for implementing a session based service is provided. The session based service is implemented by using an Internet Multimedia subsystem and by exchanging control information between the mobile terminal and a second unit. The mobile terminal comprises means for transmitting and/or receiving control information of the session based service in the body field of an Message Session Relay Protocol, MSRP, -message and means for identifying said control information in said body field by means of a content type field of the MSRP-message. Further, the content type field is arranged according to Multipurpose Internet Mail Extension, MIME, syntax.

Preferred embodiments are defined by the dependent claims.

An advantage with the present invention is that the MSRP protocol in combination with the content types according to embodiments of the present invention provides a protocol with a simple structure.

A further advantage of the present invention is that it is possible to extend the content types according to the invention to any other session based service in the future.

A further advantage of the present invention is that the deployment of the service application server, such as the whiteboard application server enables the authentication and charging problem to be solved.

A further advantage of the present invention is that enhanced functionality such as handset adaptation and media conversion may be developed on the application server in the IM subsystem.

### BRIEF DESCRIPTION OF THE DRAWINGS

A detailed description of a preferred embodiment of the inventive method and device will follow, based on the appended drawing, on which:
Fig. 1 is a schematic presentation of a 3G network architecture comprising an IP Multimedia Subsystem.
Fig. 2 is a schematic presentation of a mobile network with a whiteboard application according to an embodiment of the present invention.
Fig. 3 shows examples of extended MIME types according to embodiments of the present invention.
Fig. 4 shows a mobile terminal with a whiteboard application running on an UIQ emulator according to one embodiment of the present invention.
Fig. 5 is a flowchart of the method according to the present invention.

### DETAILED DESCRIPTION OF THE INVENTION

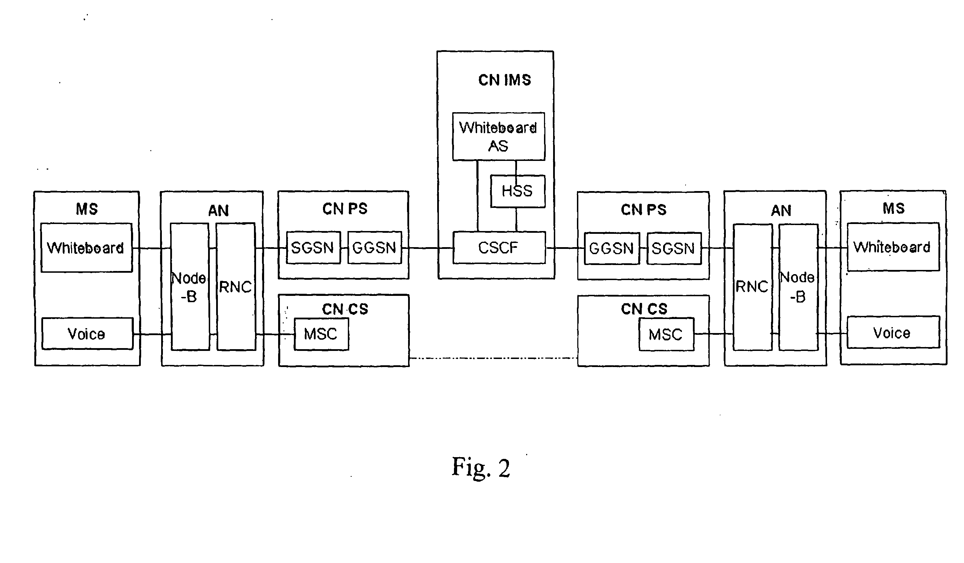

Figure 2 shows the architecture of a mobile network comprising support for a whiteboard application as an example of a session based service. The mobile network corresponds to the mobile network shown in **figure 1****.** Although the whiteboard service is exemplified in this application, the principles of the present invention are also applicable to other session based services, such as gaming services. Thus, the present invention is not limited to whiteboard applications. By introducing the whiteboard service, or another session based service, only two network entities are affected, i.e. the mobile terminal, also denoted User Equipment (UE) and the IM subsystem wherein an AS adapted for the particular service, such as whiteboard as in this case, is introduced.

On the mobile terminal, a service client application is introduced according to the present invention, such as a whiteboard client application as shown in figure 2. The service client application provides the service functionality towards the end user.

A service Application Server, such as a whiteboard application server as shown in figure 2 deployed in the CN should at least have the following functionalities:
Handling SIP messages: Perform authentication and authorization for OPTIONS message in the session.
Generating charging information: Under certain situations, the Charging Data Record (CDR) for the service can be generated.
Provide conference capability: For peer-to-peer communication, the data may be transmitted without the involvement of the service application server, but for multiparty communication, all the data should first be sent from mobile terminal to the server. The server is then responsible to distribute the data, otherwise there is a risk that mass data may cause congestion in the network.

Once the service application server node is deployed, the service is much more flexible. Other functionalities, such as handset adaptation, media conversion, may be developed on the application server to enhance the service.

The mobile terminal and the service application server comprise therefore means for transmitting messages associated with the session based service. The messages comprise control information and content. The control information may be commands from one mobile terminal to another mobile terminal. An example of this in the whiteboard case is a command that specifies which type of line that is to be drawn. A method and arrangements for transmitting the messages comprising the control information is suggested according to the present invention. The protocol is based on the Message Session Relay Protocol (MSRP) and Multipurpose Internet Mail Extension (MIME).

MSRP is an existing protocol to provide the session-oriented message transport capabilities, wherein the original purpose is to transfer instant messages carrying content on the application level. According to the present invention, the body field of an MSRP message is used to carry control information. The control information may be a command or information parameters associated with the service and a device associated with said service.

MIME is an official Internet standard that specifies how messages should be formatted so that they can be exchanged between email systems. The content type format definition of MIME is disclosed below. MIME is a very flexible message format and besides the text, image, audio and video, the MIME content types may be extended to support application-specific data. According to the present invention, the content type format of MIME is used to identify different types of control information and content in the body field of the MSRP message.

By combining the MSRP and the MIME content type according to the present invention, a protocol that supports exchanging of multimedia and application specific information is achieved. Thus, the combination of MIME and MSRP provides a new way to facilitate the application information exchange. As mentioned above, besides the whiteboard service, this combination may be used for other services or applications, such as gaming service.

The method according to the present invention is suitable for implementing a session based service in a mobile communication network between mobile terminals wherein the session based service requires an exchange of messages comprising control information. The method comprises the steps of transmitting control information of the service in the body field of an MSRP-message and identifying said control information in said body field by means of a content type field, arranged according to the MIME syntax, of the MSRP-message.

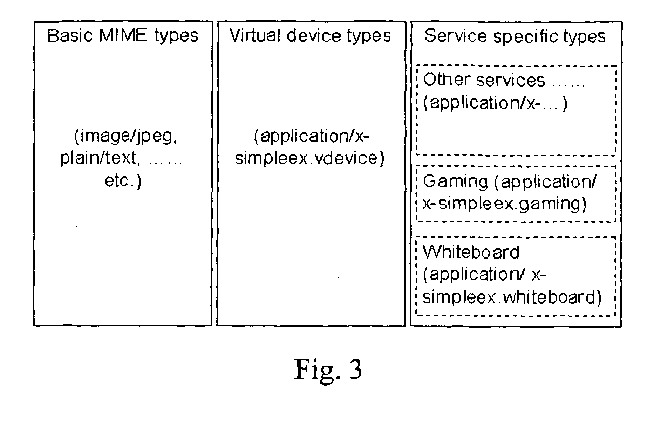

The main features of the protocol according to the present invention are:
1. MSRP is used as the content transportation protocol.
2. MIME is used as the wrapper to encapsulate the service related information including specific commands. All the service extended contents need to be wrapped into MIME format. E.g. for the whiteboard application, all of the control information, such as the commands indicating and relating to poly-line drawn on the screen, background image, clear commands are required to follow the MIME format when they are transmitted by using the MSRP message format according to one embodiment of the present invention.
3. The "multipart/mixed" content type is a special content type defined in MIME (RFC 2046) intended for use when the body parts of the message are independent and need to be bundled in a particular order. This content type can be used to package different contents into one MSRP message to be transmitted in order to transport the information in an efficient way. Not only different content type data from one service, but also those from different services can be transferred as one MSRP message. It enables the application to implement combined services such as the whiteboard service in combination with audio or the whiteboard service in combination with gaming. Through the content type "multipart/mixed", a combination of both command and content data of the same service or several different services in one MSRP message is supported, which improves the efficiency.
4. The extensibility of MIME could be utilized as the extensibility of this new protocol itself. Besides basic MIME types, the extended types are defined as shown in **figure 3****:**

The information exchanged is classified into three categories:
1. Basic MIME types according to prior art:
   Some common media types defined in MIME protocol can be exchanged natively.
2. Virtual device types:
   According to one embodiment of the present invention, the MIME content types virtual device types are introduced. The virtual device related event information is defined with the media subtype "x-simpleex.vdevice". It can be joystick, keypad and pen events on handheld devices, such as the key press event on mobile phone.
   The term of "virtual device" is used because one virtual device is an abstraction of physical devices, which behave similarly. For example, in the whiteboard application, the mouse on PC has the same behaviour as the pen on mobile phone, so their common behaviours can be abstracted to virtual device "pen".
3. Service specific types:
   According to one embodiment of the present invention, the MIME content types service specific types are introduced. The service related information is defined with the media subtype "x-simpleex.<service name>", including the "x-simpleex.whiteboard" and "x-simpleex.gaming". The high-level service friendly primitives are grouped in this category, for example, the pen thickness changing in whiteboard.

The service specific type may be generalized to support other service specific information in future due to the extensibility of MIME.

The service specific type and virtual device type may overlap to some extent. Generally speaking, the virtual device information records the basic device events, while the service specific one encapsulates and abstracts some information to provide more friendly events in an efficient way. For example, consecutive strokes drawn on the whiteboard can be represented in some pen action events, but it also can be regarded as one poly-line event from whiteboard application's point of view. It will be explained in detail later. In such situation, the application should make the decision on selecting the virtual device information or the service specific information to exchange.

### Content type format definition

In the MIME protocol, the following definition is the syntax of the content type format:
content := "Content-Type" ":" type "/" subtype *(";" parameter) parameter := attribute "=" value

According to one embodiment of the present invention, two optional parameters are introduced, the "action" parameter and the "timestamp" parameter.

The "action" parameter subdivides the information type in each service. The value of the "action" parameter varies in different services. And the usage of this parameter will be explained below.

The "timestamp" parameter is used since some services are time-critical. It is hence important to know when a command is issued or when a key event happens. It is necessary to press a timestamp on this kind of information before transportation. The value of the "timestamp" parameter may be the number of milliseconds time value since January 1, 1970, 00:00:00 GMT.

For the basic MIME content types, the message body is the media content. For extended content types, the message body consists of two parts: one five-character command and parameters. One space character is used to separate the command and the parameters. Here is the syntax for the message body of the extension content type:
message-body := command (" " *parameter)
command := 5-character command
parameter := 1 character | digits
The parameter value varies for different commands. It will be explained in the following chapters.

Some common media types are defined in the MIME protocol, such as text, image, audio and video. Without any extension, this information may be exchanged between several parties, as long as the communication parties support MIME. For the basic MIME types, the content data can be put in the body of the MSRP message directly, once the type of such content is filled in the content type field. The following is an example to send an image to the remote parties:

### MSRP [length] SEND

### TR-ID: 664

### Content-Type: image/jpeg

### [JPEG image]

The example above is a piece of an MSRP SEND message. The value of [length] indicates the length of the entire MSRP message. In this message shown above, two MSRP header fields are provided. TR-ID header field comprises a transaction identifier which is used to map the response to the corresponding request. In this example, its value is 664. If this message is sent successfully, a 200 OK response with TR-ID of 664 will be received. Content-type header field indicates the media type of the message body. Since the image to be transmitted in this example is in JPEG format, the content type field value is exactly image/jpeg. The content of the JPEG image is put into the message body. It should be noted that this example is based on the format of MSRP proposed in IETF draft 02, the present invention is not limited to this message format.

### Virtual device types

On the mobile phones, the virtual devices can be classified into: pen, joystick and keypad. The information to be exchanged includes e.g. key pressing, or pen moving.

### General format

Here is the syntax of the information of virtual devices: Content-type=application/x-simpleex.vdevice; action=<device> [; timestamp=<xxxx>]
[event]

### Parameter descriptions

- action: Device type
<device>: pen, keypad, joystick
- timestamp: Time stamp. (Optional)
<xxxx>: a digital string tells the number of milliseconds.
- event: description of the events. Defined by different devices.

| **Event** | **Format** | **Description** |
|---|---|---|
| Pen Down | PENDN <xxx><yyy> | <xxx> - X coordinate. 3 digits. |
| | | <yyy> - Y coordinate. 3 digits. |
| Pen Move | PENMV <xxx><yyy> | <xxx> - X coordinate. 3 digits. |
| | | <yyy> - Y coordinate. 3 digits. |
| Pen Up | PENUP <xxx><yyy> | <xxx> - X coordinate. 3 digits. |
| | | <yyy> - Y coordinate. 3 digits. |

### Event descriptions

In the table above are the pen action events on the high-end mobile phones: pen down, pen up and pen move.

In the table below are the keypad action events on all mobile phones: key press, key repeat, and key release.

| **Event** | **Format** | **Description** |
|---|---|---|
| Key Press | KEYPR <key> | <key> - value of the pressed key. 1 character. |
| Key Repeat | KEYRT <key><xxx> | <key> - value of the repeated key. 1 character. |
| | | <xxx> - Repeat count. 2 digits. |
| Key Release | KEYRL <key> | <key> - value of the released key. 1 character. |

Keys on the keypad can be digit keys, symbol keys and command keys as the following:
Digit Keys - 0123456789
Symbol Keys - *#
Command Keys - E(enter), U(up), D(down), L(left), R(right), C(clear)

Here are the joystick action events on those mobile phones equipped with joysticks: joystick press, joystick repeat and joystick release.

| **Event** | **Format** | **Description** |
|---|---|---|
| Joystick Press | JOYPR <joystick> | < joystick > - value of the pressed joystick. 1 character. |
| Joystick Repeat | JOYRT <joystick><xxx> | < joystick > - value of the repeated joystick. 1 character. |
| | | <xxx> - Repeat count. 2 digits. |
| Joystick Release | JOYRL <joystick> | < joystick > - value of the released joystick. 1 character. |

The keys to be pressed on joystick are the following 5 keys: U(up), D(down), L(left), R(right), C(centre)

### Examples

The following is an MSRP message to be sent by a special application. In this application, it is recorded that the pen has drawn a line on screen in about one second. The pen draw down at (12, 20), then move to (30, 20) half a second later, draw up at (50, 22) at last.
In this example, "--dv--" is used as the boundary characters.
*MSRP [length] SEND*
*TR-ID: 664*
*Content-Type: multipart*/*mixed; boundary="--dv--"*
*----dv--*
*Content-Type: application*/*x-*
*simpleex.vdevice;action=pen;timestamp=1106121182210*
*PENDN 012020*
*----dv--*
*Content-Type: application*/*x-*
*simpleex.vdevice;action=pen;timestamp=1106121182760*
*PENMV 030020*
*----dv--*
*Content-Type: application*/*x-*
*simpleex.vdevice;action=pen;timestamp=1106121183210*
*PENUP 050022*
*----dv----*

In the whiteboard application according to one embodiment of the present application, most of the information to be recorded is the pen drawing information. For the pen drawing, consecutive strokes drawn on the screen can be disassembled into one poly-line. The start point and end point pairs determine one line. To be consecutive strokes, the start point of the latter line is the end point of previous line. So, those start and end points can be used to record the strokes and the duplicate boundary points can be merged into one. To improve the efficiency, it does make sense to introduce a special type to record the poly-line information instead of piles of pen action events. Besides the poly-line and background image, there are some predefined commands and shapes need to be transported.

### General format

Here is the syntax of the information of whiteboard service:
Content-type=application/x-simpleex.whiteboard; action=<action>[;
timestamp=<xxxx>]
[information]

### Parameter descriptions

- action: Subdivided information type
cmd: the predefined command in the whiteboard
poly: the poly-line information which use draws
shape: the predefined shapes in the whiteboard
- timestamp: Time stamp. (Optional)
<xxxx>: a digital string tells the number of milliseconds. Information description of the information.

### Information descriptions

Here is the poly-line information to be recorded on the whiteboard application: the poly-line drawing action and rubber erasing action.

| **Information** | **Format** | **Description** |
|---|---|---|
| Poly-lines drawing | PLINE <xxx><yyy> | <xxx>: X coordinate. 3 digits. |
| | *(<xx>yyy>) | <yyy>: Y coordinate. 3 digits. |
| Rubber erasing | RUBER | <xxx>: X coordinate. 3 digits. |
| | <xxx><yyy> | <yyy>: Y coordinate. 3 digits. |
| | *(<xxx><yyy>) | |

For the parameters after "PLINE" and "RUBER", they consists of a series coordinates pairs, which are the anchor point and successive points to form one poly-line.

Here are the predefined shapes to be put on the whiteboard: rectangle, ellipse, filled rectangle and filled ellipse. If the width value equals the height value, rectangle becomes square, and ellipse becomes circle.

| **Information** | **Format** | **Description** |
|---|---|---|
| Rectangle | RECTA | <xxx>: X coordinate of the left-up point |
| | <xxx><yyy> | of the rectangle. 3 digits. |
| | <www><hhh> | <yyy>: Y coordinate of the left-up point of the rectangle. 3 digits. |
| | | <www>: Width of the rectangle. 3 digits. |
| | | <hhh>: Height of the rectangle. 3 digits. |
| Filled rectangle | FRECT <xxx><yyy> | <xxx>: X coordinate of the left-up point of the rectangle. 3 digits. |
| | <www><hhh> | <yyy>: Y coordinate of the left-up point of the rectangle. 3 digits. |
| | | <www>: Width of the rectangle. 3 digits. |
| | | <hhh>: Height of the rectangle. 3 digits. |
| Ellipse | ELLIP | <xxx>: X coordinate of the left-up corner |
| | <xxx><yyy> | of the ellipse. 3 digits. |
| | <www><hhh> | <yyy>: Y coordinate of the left-up corner of the ellipse. 3 digits. |
| | | <www>: Width of the ellipse. 3 digits. |
| | | <hhh>: Height of the ellipse. 3 digits. |
| Filled ellipse | FELLI | <xxx>: X coordinate of the left-up corner |
| | <xxx><yyy> | of the ellipse. 3 digits. |
| | <www><hhh> | <yyy>: Y coordinate of the left-up corner of the ellipse. 3 digits. |
| | | <www>: Width of the ellipse. 3 digits. |
| | | <hhh>: Height of the ellipse. 3 digits. |

Here are the predefined commands to be used in the whiteboard: clear, change color, change thickness ...... etc.

| **Information** | **Format** | **Description** |
|---|---|---|
| Clear | CLEAR | Clear the whole whiteboard |
| Change the pen color | LCOLR <rrr> | <rrr>: The RGB value of the color to be used to draw the line portion |
| Change the filled color | FCOLR <rrr> | <rrr>: The RGB value of the color to be used for the filled color for those filled elements. |
| Change the pen thickness | THICK <ttt> | <ttt>: the thickness of the pen in pixels. 2 digits |
| Change the line style | STYLE <sss> | <sss>: the number to indicate the line style. 1 digit. |
| | | 0: Solid |
| | | 1: Dashed |
| | | 2: Dotted |
| | | 3: Dash-Dot |
| | | 4: Dash-Dot-Dot |
| | | 5: Two-Tone |
| Change the pen nib | PNNIB <nnn> | <nnn>: the number to indicate the pen nib. 1 digit. |
| | | 0: round nib |
| | | 1: square nib |
| Lock the whiteboard | LOCKW | Lock the whiteboard, so that no one else could draw on it except the locker. |
| Unlock the whiteboard | ULOCK | Unlock the whiteboard, so that all the participating parties can draw on it. |
| New page for the whiteboard | NPAGE | Build a new page on the whiteboard, the old one will still be there. And the participating parties can change the view between those pages. |
| Turn to the special page | TPAGE <ppp> | <ppp>: the special page to be turned to. 1 digit. |
| Delete the special page | DPAGE <ppp> | <ppp>: the special page to be deleted. 1 digit. |

### Examples

The following is an MSRP message to be sent by a whiteboard application. In this application, the user clears the whiteboard first and then he draws two poly-lines: one from (10, 10) to (20,30) to (50, 40) and another from (200, 200) to (150, 150). At last, he erases the line from (120, 120) to (80, 80).
In this example, "--wb--" is used as the boundary characters.
*MSRP [length] SEND*
*TR-ID: 664*
*Content-Type: multipart*/*mixed; boundary= "--wb--*"
*----wb--*
*Content-Type: application*/*x-simpleex.whiteboard;action=cmd*
*CLEAR*
*----wb--*
*Content-Type: application*/*x-simpleex.whiteboard;action=poly*
*PLINE 010010020030050040*
*PLINE 200200150150*
*----wb--*
*Content-Type: application*/*x-simpleex.whiteboard;action=poly*
*RUBER 120120080080*
*----wb----*

### Gaming specific types

For the normal games, the information can be categories into predefined commands (for example, save, load, reset ...... etc.) and key press information. And for the gaming service, timestamp is a mandatory field to be filled.

### General format

Here is the syntax of the information of gaming sevices:
Content-type=application/x-simpleex.gaming; action=<action>;
timestamp=<xxxx>
[information]

### Parameter descriptions

- action: Subdivided information type
cmd: the predefined command information
key: the key press information
- timestamp: Time stamp.
<xxxx>: a digital string tells the number of milliseconds. information description of the information.

### Information descriptions

Here are the predefined commands for the gaming services: start/stop/pause the game, load/save the game.

| **Information** | **Format** | **Description** |
|---|---|---|
| Game Start | START | Start or restart the game |
| Game Stop | GSTOP | Stop the game |
| Game Pause | GPAUS | Pause the game |
| Game Load | GLOAD | Load the game |
| Game Save | GSAVE | Save the game |

Here are the key press events especially useful for the classic gaming equipments: left, right, up, down direction key pressing and Start, Select, X, Y, Z, A, B, C control key pressing. Although there are other kinds of keyboards, the key press information can be mapped into those keys for the gaming service.

| **Information** | **Format** | **Description** |
|---|---|---|
| Left direction key | KEYLF | Press the left direction key |
| Right direction key | KEYRT | Press the right direction key |
| Up direction key | KEYUP | Press the up direction key |
| Down direction key | KEYDN | Press the down direction key |
| X control button press | BUTNX | Press the X control key |
| Y control button press | BUTNY | Press the Y control key |
| Z control button press | BUTNZ | Press the Z control key |
| A control button press | BUTNA | Press the A control key |
| B control button press | BUTNB | Press the B control key |
| C control button press | BUTNC | Press the C control key |
| Select button press | SLECT | Press the SELECT control key |
| Start button press | START | Press the START control key |

### Examples

In the following example an MSRP message is to be sent by a gaming application. In this application, it records that the user presses the A and X button at the same time. And half a second later, he issues the pause command inside the game.
In this example, "--gm--" is used as the boundary characters.
*MSRP [length] SEND*
*TR-ID: 664*
*Content-Type: multipart*/*mixed; boundary="--gm--"*
*----gm--*
*Content-Type: application*/*x-*
*simpleex.gaming;action=key;timestamp=106121182210*
*BUTNA*
*BUTNX*
*----gm--*
*Content-Type: application*/*x-*
*simpleex.gaming;action=cmd;timestamp=1106121182760*
*GPAUS*
*----gm----*

To satisfy the needs of each service, different content types can be encapsulated in one MSRP message. For example, the whiteboard services can use the whiteboard extension to exchange the whiteboard information while the basic MIME image type is used to exchange the background image.

In the following example, the MSRP message consists of 3 parts:
1. The CLEAR whiteboard command
2. The background image with jpeg format
3. The poly-lines drawn on the screen.

*MSRP [length] SEND*
*TR-ID: 664*
*Content-Type: multipart*/*mixed; boundary= "--wb--"*
*----wb--*
*Content-Type: application*/*x-simpleex.whiteboard; action=cmd*
*CLEAR*
*----wb--*
*Content-Type: image*/*jpeg*
*[jpeg image]*
*----wb--*
*Content-Type: application*/*x-simpleex.whiteboard;action=poly*
*PLINE 010010020030050040*
*PLINE 200200150150*
*----wb----*

### User Interface

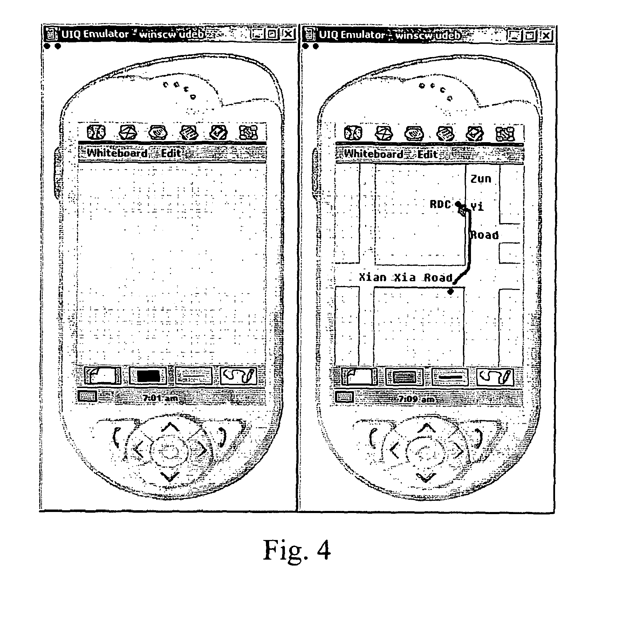

The **figures 4a** and **4b** show the whiteboard application running on UIQ emulator on a mobile terminal. UIQ is a customizable user interface platform for smart phones based on Symbian OS. It should however be noted that the present invention is not limited to UIQ, other platforms may also be used. **Figure 4a** is a clean whiteboard and **figure 4b** shows a whiteboard where something is drawn.

To make it easy for the user to activate the session based service such as the whiteboard service during a conversation, a shortcut key on the mobile terminal may be defined.

After the conversation is established, the user may then be able to press the shortcut key. One of the following two situations might happen:
1. The whiteboard client application is launched directly.
2. The portal GUI is launched. Users may select several applications to share with each other: pictures, motions, whiteboard, games, etc. The user may then launch the application he wants.

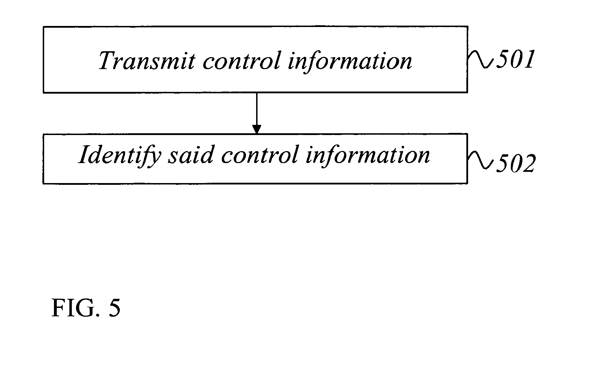

Thus, the method according to the present invention for implementing a session based service in a mobile communication network between mobile terminals wherein the session based service requires an exchange of control information is illustrated in the flowchart of figure 5.

The method comprises the steps of:
501. Transmit control information of the session based service in the body field of an MSRP-message.
502. Identify said control information in the body field by means of a content type field, preferable arranged according to the MIME syntax, of the MSRP-message.

The method according to the present invention, described above, is implemented in a mobile terminal. The mobile terminal is arranged for communication in a mobile communication network, and for using a session based service, wherein the session based service requires exchange of control information between the mobile terminal and a second unit. The mobile terminal comprises means for transmitting and/or receiving control information of the service in the body field of an MSRP-message and means for identifying said control information in said body field by means of a content type field, arranged according to the MIME syntax, of the MSRP-message.

The present invention is not limited to the above-described preferred embodiments. Various alternatives, modifications and equivalents may be used. Therefore, the above embodiments should not be taken as limiting the scope of the invention, which is defined by the appended claims.

## Claims

1. A method for implementing a session based service in a mobile communication network by using an Internet Multimedia subsystem between the mobile terminal and a second unit and by exchanging control information between the mobile terminal and the second unit, the method being **characterised in that** the mobile terminal carries out the steps of:
- transmitting and/or receiving (501) said control information of the session based service in the body field of an Message Session Relay Protocol, MSRP,-message and
- identifying (502) said control information in said body field by means of a content type field of the MSRP-message, wherein the content type field is arranged according to the Multipurpose Internet Mail Extension, MIME syntax.

2. The method according to claim 1, **characterised in that** the control information is a command.

3. The method according to any of claims 1-2, **characterised in that** the MIME comprises a content type defining characteristics of a device associated with at least one of the mobile terminals.

4. The method according to any of claims 1-2, **characterised in that** the MIME comprises a content type defining characteristics of the session based service.

5. The method according to any of claim 3-4, **characterised in that** the content type defining characteristics of a device comprises an action parameter.

6. The method according to any of claims 3-4, **characterised in that** the content type defining characteristics of a device comprises a timestamp parameter.

7. The method according to any one of claims 1-6, **characterised in that** different content types are encapsulated in one single MSRP message.

8. The method according to any one of claims 1-7, **characterised in that** the method comprises the further step of:
- running the session based service on an UIQ emulator.

9. The method according to any one of claims 1-8, **characterised in that** the session based service is a whiteboard service.

10. The method according to any one of claims 1-8, **characterised in that** the session based service is a gaming service.

11. A mobile terminal arranged for implementing a session based service in a mobile communication network by using an Internet Multimedia subsystem and by exchanging control information between the mobile terminal and a second unit, the mobile terminal is **characterised in that** it comprises means for transmitting and/or receiving control information of the session based service in the body field of an Message Session Relay Protocol, MSRP, -message and means for identifying said control information in said body field by means of a content type field of the MSRP-message, wherein the content type field is arranged according to the Multipurpose Internet Mail Extension, MIME, syntax.

12. The mobile terminal according to claim 11, **characterised in that** the control information is a command.

13. The mobile terminal according to any of claims 11-12, **characterised in that** the content type defines characteristics of a device associated with the mobile terminal.

14. The mobile terminal according to any of claims 11-12, **characterised in that** the content type defines characteristics of the session based service.

15. The mobile terminal according to any of claims 13-14, **characterised in that** the content type defining characteristics of a device comprises an action parameter.

16. The mobile terminal according to any of claims 13-14, **characterised in that** the content type defining characteristics of a device comprises a timestamp parameter.

17. The mobile terminal according to any one of claims 11-16, **characterised in that** different content types are encapsulated in one single MSRP message.

18. The mobile terminal according to any one of claims 11-17, **characterised in that** the mobile terminal comprises an UIQ emulator comprising means for running the session based service.

19. The mobile terminal according to any one of claims 11-18, **characterised in that** the session based service is a whiteboard service.

20. The mobile terminal according to any one of claims 11-19, **characterised in that** the session based service is a gaming service.

## Patentansprüche

1. Verfahren zum Implementieren eines sitzungsbasierten Dienstes in einem Mobilkommunikationsnetz durch Verwenden eines Internet-Multimedia-Subsystems zwischen dem Mobilendgerät und einer zweiten Einheit und durch Austauschen von Steuerinformation zwischen dem Mobilendgerät und der zweiten Einheit, wobei das Verfahren **dadurch gekennzeichnet ist, dass** das Mobilendgerät folgende Schritte ausführt:
- Übertragen und/oder Empfangen (501) der Steuerinformation des sitzungsbasierten Dienstes im Body-Feld einer MSRP(Message Session Relay Protocol)-Nachricht und
- Identifizieren (502) der Steuerinformation im Body-Feld mittels eines Inhaltstypfelds der MSRP-Nachricht, worin das Inhaltstypfeld gemäß der MIME(Multipurpose Internet Mail Extension)-Syntax angeordnet ist.

2. Verfahren nach Anspruch 1, **dadurch gekennzeichnet, dass** die Steuerinformation ein Befehl ist.

3. Verfahren nach einem der Ansprüche 1-2, **dadurch gekennzeichnet, dass** das MIME einen Inhaltstyp umfasst, der Kenndaten einer mit mindestens einem der Mobilendgeräte assoziierten Einrichtung definiert.

4. Verfahren nach einem der Ansprüche 1-2, **dadurch gekennzeichnet, dass** das MIME einen Inhaltstyp umfasst, der Kenndaten des sitzungsbasierten Dienstes definiert.

5. Verfahren nach einem der Ansprüche 3-4, **dadurch gekennzeichnet, dass** der Inhaltstyp, der Kenndaten einer Einrichtung definiert, einen Aktions-Parameter umfasst.

6. Verfahren nach einem der Ansprüche 3-4, **dadurch gekennzeichnet, dass** der Inhaltstyp, der Kenndaten einer Einrichtung definiert, einen Zeitstempel-Parameter umfasst.

7. Verfahren nach einem der Ansprüche 1-6, **dadurch gekennzeichnet, dass** verschiedene Inhaltstypen in einer einzelnen MSRP-Nachricht eingekapselt sind.

8. Verfahren nach einem der Ansprüche 1-7, **dadurch gekennzeichnet, dass** das Verfahren folgenden weiteren Schritt umfasst:
- Ausführen des sitzungsbasierten Dienstes auf einem UIQ-Emulator.

9. Verfahren nach einem der Ansprüche 1-8, **dadurch gekennzeichnet, dass** der sitzungsbasierte Dienst ein Whiteboard-Dienst ist.

10. Verfahren nach einem der Ansprüche 1-8, **dadurch gekennzeichnet, dass** der sitzungsbasierte Dienst ein Gaming-Dienst ist.

11. Mobilendgerät, angeordnet zum Implementieren eines sitzungsbasierten Dienstes in einem Mobilkommunikationsnetz durch Verwenden eines Internet-Multimedia-Subsystems und durch Austauschen von Steuerinformation zwischen dem Mobilendgerät und einer zweiten Einheit, wobei das Mobilendgerät **dadurch gekennzeichnet ist, dass** es Mittel umfasst zum Übertragen und/oder Empfangen von Steuerinformation des sitzungsbasierten Dienstes im Body-Feld einer MSRP(Message Session Relay Protocol)-Nachricht und Mittel zum Identifizieren der Steuerinformation im Body-Feld mittels eines Inhaltstypfelds der MSRP-Nachricht, worin das Inhaltstypfeld gemäß der MIME(Multipurpose Internet Mail Extension)-Syntax angeordnet ist.

12. Mobilendgerät nach Anspruch 11, **dadurch gekennzeichnet, dass** die Steuerinformation ein Befehl ist.

13. Mobilendgerät nach einem der Ansprüche 11-12, **dadurch gekennzeichnet, dass** der Inhaltstyp Kenndaten einer mit dem Mobilendgerät assoziierten Einrichtung umfasst.

14. Mobilendgerät nach einem der Ansprüche 11-12, **dadurch gekennzeichnet, dass** der Inhaltstyp Kenndaten des sitzungsbasierten Dienstes umfasst.

15. Mobilendgerät nach einem der Ansprüche 13-14, **dadurch gekennzeichnet, dass** der Inhaltstyp, der Kenndaten einer Einrichtung definiert, einen Aktions-Parameter umfasst.

16. Mobilendgerät nach einem der Ansprüche 13-14, **dadurch gekennzeichnet, dass** der Inhaltstyp, der Kenndaten einer Einrichtung definiert, einen Zeitstempel-Parameter umfasst.

17. Mobilendgerät nach einem der Ansprüche 11-16, **dadurch gekennzeichnet, dass** verschiedene Inhaltstypen in einer einzelnen MSRP-Nachricht eingekapselt sind.

18. Mobilendgerät nach einem der Ansprüche 11-17, **dadurch gekennzeichnet, dass** das Mobilendgerät einen UIQ-Emulator umfasst, der Mittel umfasst, um den sitzungsbasierten Dienst auszuführen.

19. Mobilendgerät nach einem der Ansprüche 11-18, **dadurch gekennzeichnet, dass** der sitzungsbasierte Dienst ein Whiteboard-Dienst ist.

20. Mobilendgerät nach einem der Ansprüche 11-19, **dadurch gekennzeichnet, dass** der sitzungsbasierte Dienst ein Gaming-Dienst ist.

## Revendications

1. Procédé pour mettre en oeuvre un service à base de session dans un réseau de communication mobile, en faisant appel à un sous-système multimédia Internet entre le terminal mobile et une seconde unité, et en échangeant des informations de commande entre le terminal mobile et la seconde unité, le procédé étant **caractérisé en ce que** le terminal mobile met en oeuvre les étapes ci-après consistant à :
- transmettre et/ou recevoir (501) lesdites informations de commande du service à base de session dans le champ de corps d'un message de protocole de relais de session de message, MSRP, et
- identifier (502) lesdites informations de commande dans ledit champ de corps de message au moyen d'un champ de type de contenu du message MSRP, dans lequel le champ de type de contenu est agencé selon la syntaxe du protocole d'extension de courriel internet multifonction, MIME.

2. Procédé selon la revendication 1, **caractérisé en ce que** les informations de commande représentent une commande.

3. Procédé selon l'une quelconque des revendications 1 à 2, **caractérisé en ce que** le protocole d'extension MIME comporte un type de contenu définissant des caractéristiques d'un dispositif associé à au moins l'un des terminaux mobiles.

4. Procédé selon l'une quelconque des revendications 1 à 2, **caractérisé en ce que** le protocole d'extension MIME comporte un type de contenu définissant des caractéristiques du service à base de session.

5. Procédé selon l'une quelconque des revendications 3 à 4, **caractérisé en ce que** le type de contenu définissant des caractéristiques d'un dispositif comprend un paramètre d'action.

6. Procédé selon l'une quelconque des revendications 3 à 4, **caractérisé en ce que** le type de contenu définissant des caractéristiques d'un dispositif comprend un paramètre d'estampille temporelle.

7. Procédé selon l'une quelconque des revendications 1 à 6, **caractérisé en ce que** différents types de contenu sont encapsulés dans un message MSRP unique.

8. Procédé selon l'une quelconque des revendications 1 à 7, **caractérisé en ce que** le procédé comprend en l'étape ci-dessous consistant à :
- exécuter le service à base de session sur un émulateur UIQ.

9. Procédé selon l'une quelconque des revendications 1 à 8, **caractérisé en ce que** le service à base de session est un service de tableau blanc.

10. Procédé selon l'une quelconque des revendications 1 à 8, **caractérisé en ce que** le service à base de session est un service de jeux.

11. Terminal mobile agencé pour mettre en oeuvre un service à base de session dans un réseau de communication mobile en faisant appel à un sous-système multimédia Internet et en échangeant des informations de commande entre le terminal mobile et une seconde unité, le terminal mobile étant **caractérisé en ce qu'**il comporte un moyen pour transmettre et/ou recevoir des informations de commande du service à base de session dans le champ de corps d'un message de protocole de relais de session de message, MSRP, et un moyen pour identifier lesdites informations de commande dans ledit champ de corps de message au moyen d'un champ de type de contenu du message MSRP, dans lequel le champ de type de contenu est agencé selon la syntaxe du protocole d'extension de courriel internet multifonction, MIME.

12. Terminal mobile selon la revendication 11, **caractérisé en ce que** les informations de commande représentent une commande.

13. Terminal mobile selon l'une quelconque des revendications 11 à 12, **caractérisé en ce que** le type de contenu définit des caractéristiques d'un dispositif associé au terminal mobile.

14. Terminal mobile selon l'une quelconque des revendications 11 à 12, **caractérisé en ce que** le type de contenu définit des caractéristiques du service à base de session.

15. Terminal mobile selon l'une quelconque des revendications 13 à 14, **caractérisé en ce que** le type de contenu définissant des caractéristiques d'un dispositif comprend un paramètre d'action.

16. Terminal mobile selon l'une quelconque des revendications 13 à 14, **caractérisé en ce que** le type de contenu définissant des caractéristiques d'un dispositif comprend un paramètre d'estampille temporelle.

17. Terminal mobile selon l'une quelconque des revendications 11 à 16, **caractérisé en ce que** différents types de contenu sont encapsulés dans un message MSRP.

18. Terminal mobile selon l'une quelconque des revendications 11 à 17, **caractérisé en ce que** le terminal mobile comprend un émulateur UIQ comprenant un moyen permettant l'exécution du service à base de session.

19. Terminal mobile selon l'une quelconque des revendications 11 à 18, **caractérisé en ce que** le service à base de session est un service de tableau blanc.

20. Terminal mobile selon l'une quelconque des revendications 11 à 19, **caractérisé en ce que** le service à base de session est un service de jeux.
